# EUROPÄISCHE PATENTSCHRIFT

(11) **EP 0 360 346 B1**
(45) Veröffentlichungstag und Bekanntmachung des Hinweises auf die Patenterteilung: **01.02.1995**
(21) Anmeldenummer: 89202352.4
(22) Anmeldetag: 18.09.1989
(51) Int. Cl.: G01L 1/24, G01G 9/00

(54) **Verfahren zur spannungsoptischen Kraftmessung und Messanordnung zur Durchführung des Verfahrens**
Process and device for optical force measurement
Procédé et dispositif de mesure de force par des moyens optiques

(30) Priorität: 22.09.1988 DE 3832180
(43) Veröffentlichungstag der Anmeldung: 28.03.1990
(73) Patentinhaber: Philips Patentverwaltung GmbH, 22335 Hamburg (DE); Philips Electronics N.V., 5621 BA Eindhoven (NL)
(72) Erfinder: Hoffmann, Hans, Dr., D-2085 Quickborn (DE); Martens, Gerhard, Dr., D-2359 Henstedt-Ulzburg (DE)
(74) Vertreter: Hartmann, Heinrich, Dipl.-Ing.

(56) Entgegenhaltungen:
- DE-A- 2 633 178
- US-A- 4 539 475
- SOVIET INVENTIONS ILLUSTRATED, Woche B37, 24. Oktober 1979, Derwent Publications Ltd, Londen, GB; & SU-A-636 491
- Fachlexikon ABC Physik, 1974, Verlag Harri Deutsch, Zürich, Seiten 855, 856

## Beschreibung

Die Erfindung bezieht sich auf eine Meßanordnung zur spannungsoptischen Kraftmessung mit mindestens drei spannungsoptischen Meßkörpern, welche zwischen zueinander parallelen Anlageflächen zweier die zu messende Kraft übertragender Körper angeordnet sind, und welche jeweils eine Lichteintrittsfläche, eine Lichtaustrittsfläche sowie eine Lichtumlenkfläche aufweisen, welche im wesentlichen senkrecht zu den Anlageflächen gerichtet sind, weiterhin mit einer optischen Sendeeinrichtung, deren polarisierter Lichtstrahl in eine Lichteintrittsfläche eines der Meßkörper gerichtet ist, wobei die Umlenkungsflächen der Meßkörper derart ausgerichtet sind, daß der in einen der Meßkörper gerichtete polarisierte Lichtstrahl nachfolgend durch die weiteren Meßkörper verläuft und den letzten der Meßkörper in Richtung auf einen optischen Detektor verläßt.

Verschiedene Verfahren und Meßanordnungen zur Kraftmessung sind bekannt.

So enthalten Meßanordnungen zur Ermittlung einer Gewichtskraft in der Regel einen Kraftsensor, sowie eine mechanische Anordnung aus Hebeln, Umlenkelementen, Federn u. dgl., um die z.B. durch ein Wägegut ausgeübte Gewichtskraft unabhängig von der Lage des Wägegutes auf einer Waage auf den Kraftsensor zu übertragen. Mechanische Stabilität der Meßanordnung und Meßgenauigkeit sind daher nur mit großem Aufwand zu gewährleisten.

Aus der DE-A-29 05 314 ist eine Meßanordnung bekannt, bei der der mechanische Aufbau erheblich einfacher ist. Die Gewichtskraft des Wägegutes wird dabei direkt auf mehrere Kraftsensoren übertragen, die zugleich die Waage, bzw. deren Meßplatte stabil lagern. Problematisch ist bei einer derartigen Meßanordnung, daß die Kraftsensoren gleiche Empfindlichkeit aufweisen müssen oder aber daß in einer Auswerteeinheit, die üblicherweise durch Fertigungstoleranzen bedingten Empfindlichkeitsstreuungen ausgeglichen werden müssen, bevor auf elektronischem Wege die Addition der Signale der einzelnen Kraftsensoren erfolgen kann, um somit Unabhängigkeit von der Lage des Wägegutes zu gewährleisten. Der erforderliche Aufwand ist hierzu erheblich.

Aus der DE-A-31 29 847 ist ein Verfahren und eine Meßanordnung bekannt, bei dem spannungsoptischem Material linear polarisiertes Licht zugeführt wird. Das linear polarisierte Licht wird in elliptisch polarisiertes Licht umgesetzt, wenn es einen unter der zu messenden Kraft sich doppelbrechend verhaltenden Körper durchstrahlt. Ein Analysator erfaßt sodann eine Phasenverschiebung und somit indirekt die zu messende Kraft. Problematisch bleibt die Krafteinleitung auf eine solche Anordnung mit nur einem Kraftsensor z. B. bei Waagen. Die Verwendung mehrerer solcher Anordnungen mit je einem Kraftsensor ist dagegen höchst aufwendig.

Aus der EP-A-O 153 997 geht ein Verfahren und eine Anordnung zur spannungsoptischen Kraftmessung z.B. für eine Waage hervor. Hierbei wird einer spannungsoptisch wirkenden Lichtleitfaser linear polarisiertes Licht zugeführt und anschließend ausgewertet. Die Lichtleitfaser ist in Kreisform zwischen zwei beabstandeten parallelen Platten angeordnet. Auf eine der Platten wirkt die zu messende Kraft. Obgleich grundsätzlich hierdurch ein einfacher Aufbau ohne aufwendige Kalibrierung gewährleistet wird, ergeben sich aufgrund der sehr geringen Dicken der empfindlichen Lichtleitfaser Probleme beim mechanischen Aufbau und der Ein- bzw. Auskopplung des Lichtes.

Eine Anordnung der eingangs genannten Art ist durch "Soviet Inventions Illustrated, Woche B37, 24.10.79, Derwent Publication Ltd., London, GB, & SU-A-636 491 (MOSC. MECH. RES. INST.)" bekannt. Dort werden Elemente aus Silikatglas verwendet, um zu messende Kräfte in ein elektrisches Signal umzusetzen. Das piezooptische Meßelement besteht aus drei im Querschnitt rechteckigen zu einem Dreieck aneinandergelegten Stäben. Die Ecken des Dreiecks sind zueinanderweisend abgeschrägt und zwei von ihnen versilbert, um einen über die dritte Ecke eingeleiteten Lichtstrahl besser zu reflektieren. Die Krafteinleitung auf das dreieckige Meßelement, das nach unten abgestützt ist, erfolgt über ein nach oben zugespitztes und aufgesetztes Krafteinleitungselement. Das von einem Laser ausgehende und in das Meßelement eingeleitete Licht wird im Meßelement durch die Krafteinwirkung phasenverschoben. Die Phasenverschiebung ist proportional zur eingeleiteten Kraft und wird außerhalb des Meßelements gemessen. Zur Arbeitspunkteinstellung ist ferner noch ein Phasenschieber zwischengeschaltet.

Der vorliegenden Erfindung liegt die Aufgabe zugrunde, eine Meßanordnung der eingangs genannten Art zu schaffen, die sowohl eine hohe Meßgenauigkeit als auch eine hohe Meßempfindlichkeit ermöglicht.

Die Lösung gelingt dadurch, daß die Meßkörper mit Abstand und entfernt voneinander angeordnet sind, und daß die Lichteintrittsflächen, Lichtaustrittsflächen und die Umlenkflächen bei jedem der Meßkörper nach Art eines Prismas dreieckig zueinander verlaufen.

Die erfindungsgemäße Meßanordnung dient hauptsächlich dazu, eine Gewichtskraft zu messen, also eine nicht punktförmig angreifende Kraft. Überraschenderweise hat sich gezeigt, daß spannungsoptische Meßkörper geeignet sind, gleichzeitig als Meßsensor sowie mechanische Stütz- und optisches Umlenkelement zu dienen.

Ein Lichtstrahl linear polarisierten Lichtes wird durch eine Meßstrecke aus mehreren spannungsoptischen Meßkörpern geleitet. Die Meßkörper stützen statisch stabil eine das Wägegut aufnehmende Platte ab und sind derart geometrisch ausgebildet und in Abstand zueinander angeordnet, daß der Lichtstrahl in eine Auswerteeinheit umgelenkt wird. Der Lichtstrahl erfährt in jedem der mindestens drei Meßkörper eine Veränderung seines Polarisationszustandes in Abhängigkeit der auf den jeweiligen Meßkörper wirkenden Kraft. Diese kann für jeden Meßkörper ein gleich großer Anteil, aber auch ein nicht gleich großer Anteil der zu messenden Gesamtkraft sein. Nach dem vorgeschlagenen Verfahren können grundsätzlich beliebig viele Meßkörper vorgesehen sein. Es können aber auch lediglich den Lichtstrahl umlenkende Elemente vorgesehen sein, sofern mindestens drei spannungsoptische Meßkörper verbleiben und ein Kraftnebenschluß ausgeschlossen ist.

Der in die Auswerteeinheit umgelenkte und in seiner Polarisation beeinflußte Lichtstrahl weist die Summe aus allen einzelnen Phasenverschiebungen der Meßkörper auf und repräsentiert somit die zu messende Kraft. In der Auswerteeinheit trifft der Lichtstrahl auf einen Polarisationsteiler, der eine Auftrennung in Lichtkomponenten bewirkt, welche von zwei Fotodioden erfaßt und in entsprechenden elektrische Signale umgewandelt werden. Diese Signale gelangen zur weiteren Auswertung in eine nachgeschaltete Recheneinheit, z.B. in einen selbstkalibrierenden Mikrocomputer, dessen Ausgangssignale einer Anzeigeeinheit zugeführt werden können, bzw. einer entsprechenden Schnittstelle.

Aufgrund der mechanischen Meßhaltigkeit, also der sehr kleinen geometrischen Toleranzen der Dimensionen der Meßkörper, kann ein Abgleich einzelner Meßkörper entfallen. Lediglich für Präzisionsmessungen kann ein einmalig durchzuführender Abgleich der ganzen Meßstrecke, also aller Meßkörper gemeinsam erforderlich sein. Unabhängig hiervon ist selbstverständlich die Elektronik in bezug auf Offsetfehler abzugleichen.

Die erfindungsgemäße Meßanordnung weist zwei sich gegenüberliegende in Abstand befindliche parallele Platten auf. Wird eine Gewichtskraft gemessen, dann sind die Platten horizontal ausgerichtet. Von dieser Ausrichtung wird im folgenden ausgegangen. Auf die obere Platte wirkt die zu messende Kraft ein. Die untere Platte stützt sich auf einer Unterlage ab. Zwischen den Platten ist eine Meßstrecke angeordnet. Vorzugsweise wird sie aus vier spannungsoptischen Meßkörpern gebildet, welche in Abstand zueinander angeordnet sind. Die Meßkörper haben die Form von prismatischen Stäben mit zwei zueinander parallelen Endflächen, welche die Platten berühren und weitere Flächen, von denen zwei in einem rechten Winkel aneinander stoßen. Die Meßkörper sind derart angeordnet, daß die zuletzt genannten Flächen von je zwei Meßkörpern einander gegenüberliegen. Wird eine andere Anzahl von Meßkörpern vorgesehen, dann sind die Winkelverhältnisse ggf. entsprechend zu ändern. Die Grundfläche der prismatischen Stäbe kann auch von der Dreiecksform abweichen. Sie kann dann mehrere als drei Ecken aufweisen, sofern die Ablenkung des Lichtstrahles weiter der eines Dreiecks entspricht. Es kann auch eine Variation bzw. Verkleinerung der Querschnittsfläche der prismatischen Stäbe in Höhe des Lichtstrahlendurchtritts vorgesehen sein. Dies dient der Vergrößerung der Meßempfindlichkeit und zur Homogenisierung des Spannungsverlaufs im Meßkörper.

Zwischen zwei Meßkörpern und den Platten ist eine optoelektronische Einheit - ohne Kraftnebenschluß - angeordnet. Diese weist im wesentlichen eine Lichtquelle für linear polarisiertes Licht und eine Auswerteeinheit auf. Die Lichtquelle für linear polarisiertes Licht ist vorzugsweise durch eine Steuerschaltung mit einer lichtemittierenden Diode (LED) mit nachgeschaltetem Kolimator und Polarisator oder mit einer Laserdiode und Kolimator aufgebaut.

Der erzeugte Lichtstrahl wird durch die spannungsoptischen Meßkörper doppelbrechend beeinflußt und in die Auswerteeinheit umgelenkt und in dieser mittels eines Polarisationsteilers in zwei orthogonal zueinander linear polarisierte Lichtkomponenten zerlegt, die vorzugsweise mit Fotodioden in zwei elektrische Signale umgewandelt werden. In einer nachgeschalteten elektronischen Recheneinheit, vorzugsweise mit einem selbstkalibrierenden Mikrocomputer, werden diese Signale verarbeitet und einer Anzeigeeinheit zugeführt.

Um einen optimalen optischen Arbeitspunkt einzustellen, kann ein phasenverschiebendes Element den Polarisationsteiler vorgeschaltet sein. Es kann auch an anderer Stelle im Strahlengang angeordnet sein. Hierzu kann aber auch eine Feder hoher Elastizität etwa mittig zwischen den Platten vorgesehen sein, die dann über dies dem Zusammenhalt der Platten dient. Gemäß einer besonderen Ausgestaltung der vorliegende Erfindung werden Meßkörper aus Quarzglas oder Kronglas verwendet, da dann in bekannter Weise durch Verwendung bestimmter Wellenlängen durch Reflexionen des Lichts an den Hypothenuseflächen der prismatischen Stäbe zusätzliche Phasenverschiebungen erzeugt werden können, deren Gesamtverschiebung bereits einen optimalen optischen Arbeitspunkt bewirkt und somit auf ein zusätzliches phasenverschiebendes Element und eine Feder verzichtet werden kann.

Die Meßkörper können mit einer der Platten untrennbar verbunden sein, z.B. verklebt.

Ferner kann auch vorgesehen sein, daß die optoelektronische Einheit als Ganzes oder teilweise außerhalb der Platten angeordnet ist, sofern eine optisch stabile Verbindung zu den Meßkörpern gewährleistet ist.

Weitere bevorzugte Ausgestaltungen der vorliegenden Erfindung ergeben sich aus den Patentansprüchen 5 bis 11.

Die Erfindung wird nachfolgend an einem Ausführungsbeispiel einer Meßanordnung unter Bezugnahme auf eine Zeichnung näher erläutert. Es zeigt:
- Fig. 1: eine perspektivische Ansicht einer erfindungsgemäßen Meßanordnung zur spannungsoptischen Kraftmessung mit vier Meßkörpern, und
- Fig. 2: eine optoelektronische Einheit zur Erzeugung und Auswertung von polarisiertem Licht.

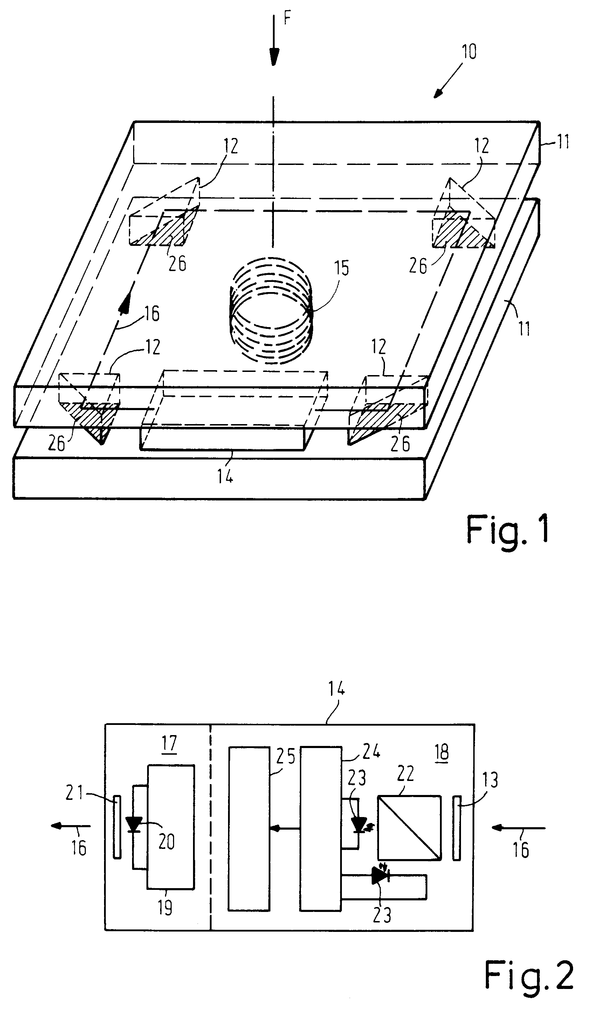

Fig. 1 zeigt eine Meßanordnung 10 zur spannungsoptischen Kraftmessung. Die zu messende Kraft wirkt entsprechend Pfeil F auf die in Fig. 1 obere von zwei zueinander in Abstand parallel angeordneten Platten 11. Die Platten 11 werden über mindestens drei, vorzugsweise vier spannungsoptische Meßkörper 12 im Abstand gehalten.

Die vier Meßkörper 12 haben die Form prismatischer Stäbe, bzw. rechtwinkliger Prismen und sind in Abstand zueinander derart zwischen den Platten angeordnet, daß sie mit ihren parallelen Flächen die Platten 12 berühren und jede der rechtwinklig aneinander anstoßenden Seitenflächen eines jeden Meßkörpers 12 je einer entsprechenden Seitenfläche eines anderen Meßkörpers 12 zugewandt ist. Wirkt eine Kraft auf die Platte 11, dann werden die Meßkörper 12 verformt. Die Meßkörper 12 sind mit jeweils einer der Platten 11 untrennbar verbunden, z.B. verklebt über die Flächen 26. Die Meßkörper bestehen aus Quarzglas, Kronglas, Polykarbonat o. dgl. Vorzugsweise ist Quarz-oder Kronglas zu verwenden, da dann in einer Anordnung mit vier Meßkörpern 12 auf ein weiter unten näher beschriebenes phasenverschiebendes Element 13 einer Auswerteinheit 18 oder auf eine Feder 15 zwischen den Platten 11 verzichtet werden kann.

Ferner ergibt sich ein besonderer Vorteil, wenn die Meßkörper 12 untereinander baugleich sind, da dann kein besonderer optischer Abgleich der einzelnen Meßkörper 12 erforderlich ist, sondern lediglich für Präzisionsmessungen ein einziger optischer Abgleich der gesamten Meßstrecke aus z.B. vier Meßkörpern 12 erforderlich sein kann.

Zwischen zwei Meßkörpern 12 ist eine optoelektronische Einheit 14 angeordnet, in welcher ein Lichtstrahl 16 linear polarisierten Lichtes erzeugt wird, welcher die Meßkörper 12 durchstrahlt, von diesen spannungsdoppelbrechend beeinflußt und wieder in die optoelektronische Einheit 14 hinein umgelenkt wird. Die Winkel der prismatischen Meßkörper 12 sind entsprechend ihrer Anzahl zu bestimmen. Die optoelektronische Einheit 14 kann auch außerhalb des Spaltes zwischen den Platten 11 angeordnet sein, sofern sie optisch stabil mit der Meßstrecke verbunden ist.

Die Kraft in Pfeilrichtung F kann beispielsweise im Falle einer Personenwaage die Gewichtskraft einer zu wiegenden Person sein, aber auch jede andere zu messende Kraft. Besonders vorteilhaft ist die Lagerung der oberen Platte 11 direkt auf den Meßkörpern 12, da dadurch zusätzliche mechanische Halte- oder Hebelelemente entfallen und durch die optisch einfach abgleichbare, bzw. überhaupt nicht abzugleichende Meßstrecke eine besonders einfache Meßanordnung gegeben ist. Ungleich verteilte Belastungen der Platte 11 und folglich unterschiedliche Verformungen der Meßkörper 12 führen erfindungsgemäß zum gleichen Meßergebnis der Gesamtkraft.

Fig. 2 zeigt schematisch die optoelektronische Einheit 14. Sie besteht aus einem Abschnitt 17 zur Erzeugung eines polarisierten Lichtstrahles 16 und einer Auswerteinheit 18. Im Abschnitt 17 ist zur Lichterzeugung eine Steuerschaltung in Glied 19 für die Ansteuerung einer LED mit Polarisator oder aber einer Laserdiode 20 mit einem nachgeschalteten Kollimator 21 vorgesehen. Der Lichtstrahl 16 tritt, nachdem er die Meßstrecke durchlaufen hat, in die Auswerteeinheit ein und passiert ein phasenverschiebendes Element 13. Dies kann notwendig sein, um den zunächst linear polarisierten und nun durch Spannungsdoppelbrechung in den Meßkörpern 12 elliptisch polarisierten Lichtstrahl bezüglich seines Polarisationszustandes empfindlich auswerten zu können. Hierdurch wird der optimale optische Arbeitspunkt eingestellt. Wie bereits oben angedeutet, kann anstatt eines phasenverschiebenden Elements 13 auch eine Feder 15 mit hoher Elastizität vorgesehen sein. Diese in Fig. 1 dargestellte Feder 15 ist zwischen den Platten 11 angeordnet. Die Feder 15 kann überdies dem Zusammenhalt der Platten 11 dienen. Wird eine Meßstrecke aus vier Meßkörpern 12 aus z.B. Quarz- oder Kronglas vorgesehen, dann kann, wie bereits angedeutet, sowohl auf die Feder 15 als auch auf das phasenverschiebende Element 13 verzichtet werden, da sich ein optimaler Arbeitspunkt dann automatisch ergibt.

Dem phasenverschiebenden Element 13 ist ein Polarisationsteiler 22 nachgeschaltet. Ausgangsseitig ist er mit zwei Fotodioden 23 gekoppelt, welche die beiden Lichtintensitäten in elektrische Signale wandeln. Zur weiteren Verarbeitung dieser elektrischen Signale ist den Fotodioden 23 eine elektronische Schaltung mit einer Recheneinheit 24 und einer Anzeigeeinheit 25 nachgeschaltet. Als Recheneinheit 24 kann ein selbstkalibrierender Mikrocomputer mit programmierbaren Speichern vorgesehen sein. Hier sei erwähnt, daß die elektronischen Bauelemente in bekannter Weise abgeglichen werden müssen, um Offsetfehler zu begrenzen.

Zur Stromersparnis können die Messungen auch intermittierend automatisch durch den Mikrocomputer gesteuert abgeschaltet werden, wenn die Meßanordnung nicht belastet wird.

## Patentansprüche

1. Meßanordnung zur spannungsoptischen Kraftmessung mit mindestens drei spannungsoptischen Meßkörpern (12), welche zwischen zueinander parallelen Anlageflächen zweier die zu messende Kraft übertragender Körper (11) angeordnet sind, und welche jeweils eine Lichteintrittsfläche, eine Lichtaustrittsfläche sowie eine Lichtumlenkfläche aufweisen, welche im wesentlichen senkrecht zu den Anlageflächen gerichtet sind, weiterhin mit einer optischen Sendeeinrichtung, deren polarisierter Lichtstrahl in eine Lichteintrittsfläche eines der Meßkörper gerichtet ist, wobei die Umlenkungsflächen der Meßkörper derart ausgerichtet sind, daß der in einen der Meßkörper gerichtete polarisierte Lichtstrahl nachfolgend durch die weiteren Meßkörper verläuft und den letzten der Meßkörper in Richtung auf einen optischen Detektor (14) verläßt,
dadurch gekennzeichnet, daß die Meßkörper (12) mit Abstand und entfernt voneinander angeordnet sind, und daß die Lichteintrittsflächen, Lichtaustrittsflächen und die Umlenkflächen bei jedem der Meßkörper nach Art eines Prismas dreieckig zueinander verlaufen.

2. Meßanordnung nach Anspruch 1,
dadurch gekennzeichnet, daß die die zu messende Kraft übertragenden Körper (11) durch Platten ausgebildet sind, welche durch eine Feder (15), welche der Einstellung eines optimalen optischen Arbeitspunktes dient und etwa mittig zwischen den Platten (11) angeordnet ist, elastisch zueinander gedrückt sind.

3. Meßanordnung nach Anspruch 1 oder 2,
dadurch gekennzeichnet, daß ein phasenverschiebendes Element (13) im Strahlengang der Meßstrecke angeordnet ist.

4. Meßanordnung nach einem der Ansprüche 1 bis 3,
dadurch gekennzeichnet, daß vier spannungsoptische Meßkörper (12) die Meßstrecke bilden, daß die Lichtquelle (17) und die Auswerteeinheit (18) eine optoelektronische Einheit (14) bilden, welche zwischen den Kraftübertragenden Körpern (11) und zwei Meßkörpern (12) angeordnet ist, ohne einen Kraftnebenschluß zu erzeugen.

5. Meßanordnung nach einem der Ansprüche 1 bis 4,
dadurch gekennzeichnet, daß die Meßkörper (12) die Form eines prismatischen Stabes aufweisen und mit ihren parallelen Endflächen an die Kraftübertragenden Körper (11) angrenzen und daß jeder Meßkörper (12) mit einem der Kraftübertragenden Körper (11) untrennbar verbunden ist.

6. Meßanordnung nach einem der Ansprüche 1 bis 5,
dadurch gekennzeichnet, daß der Querschnitt der Meßkörper (12) zwischen seinen parallelen Flächen bei gleichem Verhältnis der Begrenzungskanten dieses Querschnittes variiert und ein kleinster Querschnitt am Ort des Lichtstrahldurchschnitts liegt.

7. Meßanordnung nach einem der Ansprüche 1 bis 6,
dadurch gekennzeichnet, daß die Meßkörper (12) baugleich sind und aus spannungsoptischem Material, wie Quarzglas, Kronglas, Polykarbonat, o. dgl. bestehen.

8. Meßanordnung nach einem der Ansprüche 1 bis 7,
dadurch gekennzeichnet, daß die Auswerteeinheit (18) einen Polarisationsteiler (22) mit zugeordneten Fotodioden (23) und eine nachgeschaltete elektronische Recheneinheit (24) sowie eine dieser nachgeschaltete Anzeigeeinheit (25) aufweist.

9. Meßanordnung nach einem der Ansprüche 1 bis 8,
dadurch gekennzeichnet,
daß die optische Sendeeinrichtung eine Laserdiode (20) und einen Kollimator (21) enthält.

## Claims

1. A measurement device for stress-optical force measurement, comprising at least three stress-optical measurement elements (12) which are arranged between mutually parallel contact surfaces of two elements (11) which transfer the force to be measured, and comprise a respective light entrance face, a light exit face and a light deflection face, which faces are oriented substantially perpendicularly to the contact surfaces, and also comprising an optical transmission device whose polarized light ray is applied to a light entrance face of one of the measurement elements, the deflection faces of the measurement elements being oriented in such a manner that the light ray applied to one of the measurement elements successively passed through the further measurement elements and emerges from the last measurement element in the direction of an optical detector (14), characterized in that the measurement elements (12) are arranged at a distance and remote from one another, and that the light entrance faces, the light exit faces and the deflection faces in each measurement element extend in the form of a triangle relative to one another as in a prism.

2. A measurement device as claimed in Claim 1, characterized in that the elements 911) transferring the force to be measured are formed by plates which are elastically pressed against one another by a spring (15) which serves to adjust an optimum optical working point and is arranged approximately centrally between the plates (11).

3. A measurement device as claimed in Claim 1 or 2, characterized in that a phase-shifting element (13) is arranged in the beam path of the measurement array.

4. A measurement device as claimed in one of the Claims 1 to 3, characterized in that four stress-optical measurement elements (12) form the measurement array, the light source (17) and the evaluation unit (18) forming an optoelectronic unit (14) which is arranged between the force transfer elements (11) and two measurement elements (12) without force being shunted.

5. A measurement device as claimed in one of the Claims 1 to 4, characterized in that the measurement elements (12) are shaped as a prismatic rod, their parallel end faces adjoining the force transfer elements (11), and each measurement element (12) being permanently connected to one of the force transfer elements (11).

6. A measurement device as claimed in one of the Claims 1 to 5, characterized in that the cross-section of the measurement element (12) between its parallel faces varies for the same ratio of the boundary edges of this cross-section, a smallest cross-section being situated at the location of the light beam passage.

7. A measurement device as claimed in one of the Claims 1 to 6, characterized in that the measurement elements (12) have the same construction and are made of a stress-optical material, such as quartz glass, crown glass, polycarbonate or the like.

8. A measurement device as claimed in one of the Claims 1 to 7, characterized in that the evaluation unit (18) comprises a polarisation splitter (22) with associated photodiodes (23) and a subsequent electronic arithmetic unit (24) as well as a subsequent display unit (25).

9. A measurement device as claimed in one of the Claims 1 to 8, characterized in that the optical transmission device comprises a laser diode (20) and a collimator (21).

## Revendications

1. Dispositif de mesure, pour la mesure de force par des moyens optiques, avec au moins trois corps de mesure (12) photoélastiques, disposés entre les surfaces d'appui, mutuellement parallèles, de deux corps (11), transmettant la force à mesurer et présentant chacun une surface d'entrée de lumière, une surface de sortie de lumière ainsi qu'une surface de déviation de lumière, ces surfaces étant orientées sensiblement perpendiculairement par rapport aux surfaces d'appui, avec, en outre, un dispositif émetteur optique, dont le rayon lumineux polarisé est dirigé dans une surface d'entrée de lumière de l'un des corps de mesure, les surfaces de déviation des corps de mesure étant orientées de manière que le rayon de lumière polarisée dirigé dans un des corps de mesure passe successivement par les autres corps de mesure et quitte le dernier des corps de mesure dans la direction d'un détecteur optique (14), caractérisé en ce que les corps de mesure (12) sont disposés à distance et éloignés les uns des autres et en ce que les surfaces d'entrée de lumière, les surfaces de sortie de lumière et les surfaces de déviation de chacun des corps de mesure s'étendent les unes par rapport aux autres en triangle à la façon d'un prisme.

2. Dispositif de mesure selon la revendication 1, caractérisé en ce que les corps (11) transmettant la force à mesurer sont constitués par des plaques pressées élastiquement les unes par rapport aux autres au moyen d'un ressort (15), qui sert au réglage d'un point opératoire optique optimale et est disposé à peu près au centre entre les plaques (11).

3. Dispositif de mesure selon la revendication 1 ou 2, caractérisé en ce qu'un élément déphaseur (13) est disposé dans le trajet du rayon du chemin de mesure.

4. Dispositif de mesure selon l'une des revendications 1 à 3, caractérisé en ce que quatre corps de mesure photoélastiques (12) constituent le chemin de mesure, en ce que la source lumineuse (17) et l'unité d'exploitation (18) constituent une unité optoélectronique (14) qui est disposée entre les corps (11) transmettant la force et deux corps de mesure (12), sans créer un circuit dérivé pour la transmission de la force.

5. Dispositif de mesure selon l'une des revendications 1 à 4, caractérisé en ce que les corps de mesure (12) ont la forme d'une barre prismatique et se raccordent en limite, par leurs faces d'extrémité parallèles, aux corps (11) transmettant la force, et en ce que chaque corps de mesure (12) est relié de façon inséparable à l'un des corps (11) transmettant la force.

6. Dispositif de mesure selon l'une des revendications 1 à 5, caractérisé en ce que la section transversale des corps de mesure (12) varie entre ses faces parallèles, tout en conservant constant le rapport entre les arêtes de délimitation de cette section transversale et la section transversale minimale se situant à l'endroit du passage du rayon lumineux.

7. Dispositif de mesure selon l'une des revendications 2 à 6, caractérisé en ce que les corps de mesure (12) sont de construction identique et sont réalisés en un matériau photoélastique tel que du verte de quartz, du verte à boudine, du polycarbonate ou analogues.

8. Dispositif de mesure selon l'une des revendications 1 à 7, caractérisé en ce que l'unité d'exploitation (18) présente un diviseur de polarisation (22), avec des photodiodes (23) associées et une unité de calcul électronique (24) mise en circuit en aval, ainsi qu'une unité d'affichage (25) mise en circuit en aval de l'unité de calcul (24).

9. Dispositif de mesure selon l'une des revendications 1 à 8, caractérisé en ce que le dispositif émetteur optique contient une diode laser (20) et un collimateur (21).
